Europäisches Patentamt

**European Patent Office**

**Office européen des brevets**

(19)

(11) Publication number: **0 133 542**

**A2**

(12)

# EUROPEAN PATENT APPLICATION

(21) Application number: **84109093.9**

(22) Date of filing: **01.08.84**

(51) Int. Cl.⁴: **B 62 K 13/02**

(30) Priority: **05.08.83 IT 2259483 U**

(43) Date of publication of application:
**27.02.85 Bulletin 85/9**

(84) Designated Contracting States:
**AT BE DE FR GB NL SE**

(71) Applicant: **TOUR MECCANICA S.r.l.**
**Via F.lli Bronzetti, 31**
**I-20129 Milan(IT)**

(72) Inventor: **Della Toffola, Ottorino**
**Viale Andrea Doria, 16**
**I-20100 Milan(IT)**

(74) Representative: **Dr. Ing. A. Racheli & C.**
**Viale San Michele del Carso, 4**
**I-20144 Milano(IT)**

(54) **A single-seat bicycle easily convertible into a two-seat bicycle.**

(57) A one-seat bicycle convertible into a two-seat wherein rearwardly of the stiffening cross-pieces for the rear wheel, the frame has an additional fork (16) parallel to the column supporting the normal first saddle (S1) of the bicycle, said fork (16) terminating with a receiving means (18) capable of supporting an additional saddle (S2) or a basket (C) holding different articles.

FIG.2

Applicant:

TOUR MECCANICA S.R.L.

IT - 20129 MILAN

Via F.lli Bronzetti, 31

"A SINGLE-SEAT BICYCLE EASILY CONVERTIBLE INTO A TWO-SEAT BICYCLE"

This invention relates to the field of bicycles. Normally, bicycles cannot carry two persons, unless with danger to the driver's and passenger's safety, and however without any passenger's active partecipation.

Two-seat bicycles, also referred to as tandem bicycles, have been also provided. However, such tandems comprise a bicycle having a double frame, as well as a double driving system. Such a tandem bicycle may be used as such, but is not convenient as a one-seat bicycle, because of being heavy and cumbersome for normal use by a single cyclist.

The present invention is concerned with a one-seat bicycle that in a very short time (about 60 seconds) can ben safely and efficiently converted by any person of ordinary skill into a two-seat bicycle, on which both passengers contribute to motion by adding the energies of the second cyclist to those of the first one.

Thus, a vehicle having unique capabilities of use and minimum dimensions is provided. Additionally, this bicycle can be also made in a foldable version, thereby resulting in a very useful article which can be used also as an auxiliary transport means on motor-cars, roulottes and pleasure-boats.

The main object has been achieved by providing a frame in which, at the zone of the retaining fork for the rear wheel hub, an additional fork is welded at nearly vertical position with a proper angle to the vertical. Preferably, the angle of this additional fork is such as to be parallel to the primary column supporting the normal first saddle of the bicycle. The additional fork terminates with a receiving means capable of supporting an additional saddle or basket for holding different articles.

An improvement of the bicycle provides a means fixed to the column carrying the bicycle first saddle, which is capable of carrying the handle bar for the rear cyclist. This means can be a plate, eventually provided with a shaped counter plate, which is capable of holding the central ends of two half-handle bars terminating with still another plate. Two screws, joining both the plates, that is the fixed plate and the movable plate of the two half handle-bars, enable to block the two half-handle bars at upright position, that is with the hand grips supporting the second passenger or at a concealed lowered position under the basket.

The handle bar transformation is facilitated by the use of a male wrench having a convenient handgrip, forming part of the bicycle fittings.

A further feature is the rear wheel hub coaxially carrying a pair of chain holder gear wheels.

A further improvement provides that the pedal cranks can be easily fixed and removed by means of a screw which, by screwing down, fixes the pedal crank, while, when unscrewed, acts upon a small lid made integral with the pedal crank, so that said pedal crank can be extracted.

The present invention will now be further described with reference to an exemplary embodiment as shown on the accompanying drawings, in which:

Fig. 1 is a general side view of a bicycle according to the present invention when equipped for a single cyclist;

Fig. 2 is a view of the same bicycle of Fig. 1 when equipped for two cyclists;

Fig. 3 is an exploded view of the pedal crank assembling device;

Fig. 4 is a sectional view of the pedal crank hub as mounted;

Fig. 5 is an enlarged view of the rear connection zone for the basket;

Figs. 6a and 6b are side views of the column as rotated by 90° to each other

Fig. 7 is a view of the handle bar assembling detail; and

Fig. 8 is a view of the two half-handle bars as mounted on the column.

Referring to the accompanying drawings, it will be seen that a bicycle, generally designated at 10, has sizes and dimensions quite similar to a standard single-seater bicycle. The frame of such a bicycle comprises a front fork 11, a column 12 on which the saddle S1 is mounted, stiffening crosspieces 13, a connection element 14 between the first handle bar M and first pedals P, as well as a tube 15 connecting the rear wheel to the driving device carrying the first pedal cranks P.

A bicycle according to the present invention is further provided with a rear fork 16 and a connection tube 17 connecting the free end of the rear fork 16 with the upper end of the saddle holder column 12. The end of said fork 16 is provided with a receiving means 18, on which the auxiliary saddle S2 can be mounted. Advantageously, the basket C is also provided with a fastening member 36 mating with the receiving means 18, so that when used by a single person the bicycle takes the aspect of a standard one seat bicycle.

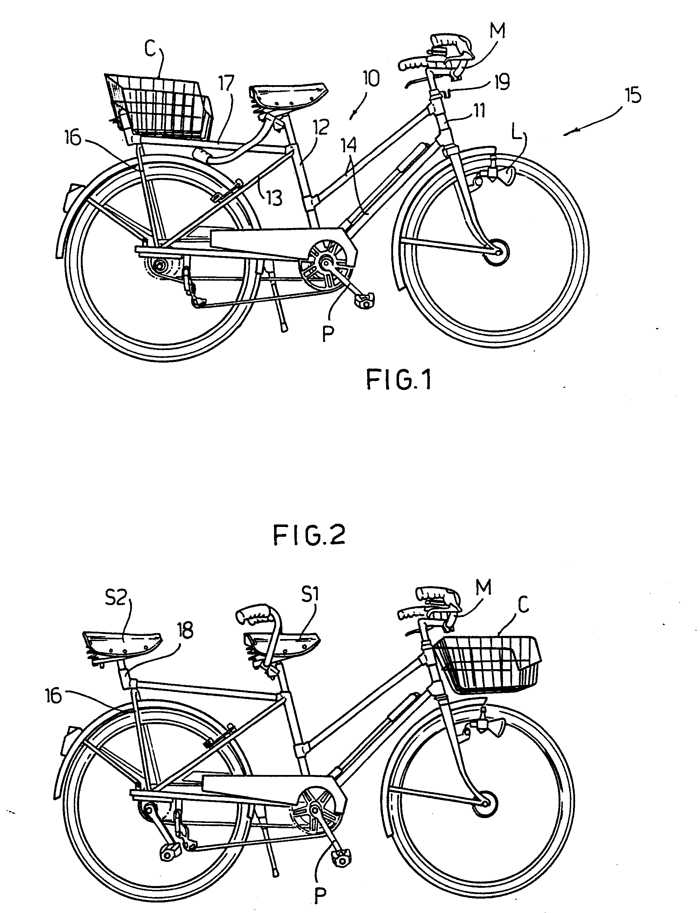

The basket C is also provided with a further connection device 37, which can be received within the hook 19 arranged under the handle bar M for the first cyclist. It is also provided with a bearing 38 for the front fork 11, so that the basket C can be placed at the

0133542

front at the position shown in Fig. 2, when the second saddle S2 is mounted. The lamp L will be mounted on the front wheel.

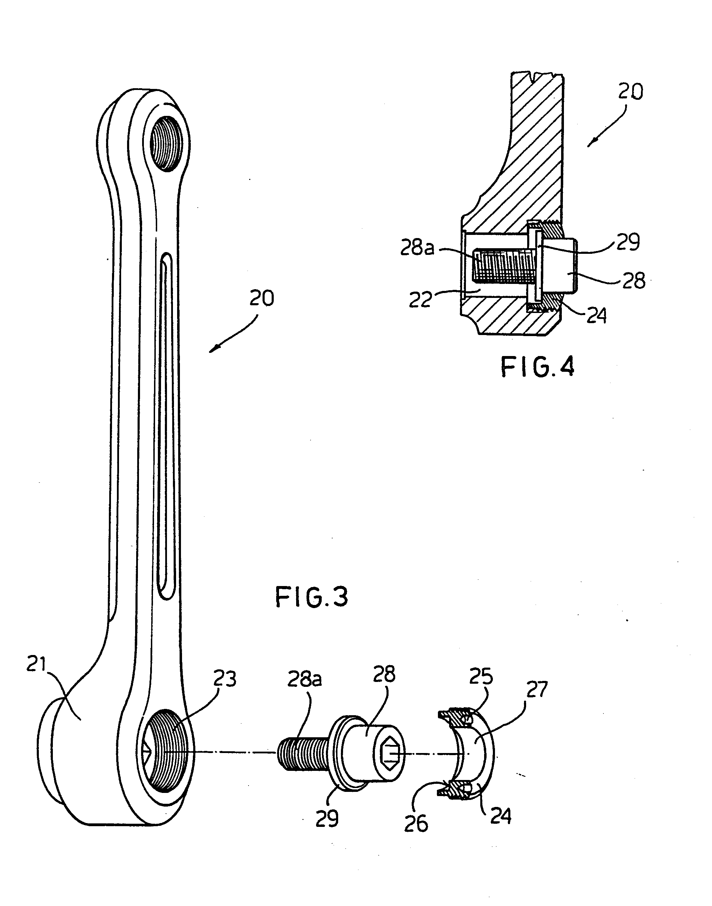

The auxiliary pedal crank 20 (Figs. 3 and 4) is implemented by providing in the hub 21 of pedal crank 20, in addition to the normal square hole 22, a screw thread 23 into which a head 24 penetrates and can be screwed by means of holes 25. This threaded head 24 has a shoulder 26 and a hole 27, into which a screw 28 can penetrate. This screw is integral with a ring 29 which can be received in said shoulder 26. When the square hole 22 is penetrated on the drive shaft of the rear wheel, the screw 28 with its screw thread 28a provides for securing the pedal crank 20 to the drive shaft. When desiring to remove the pedal crank 20, it is only needed to unscrew said screw 28. As soon as its ring 29 contacts the shoulder 26 further unscrewing extracts the pedal crank 20 from the square shaft on which it was inserted.

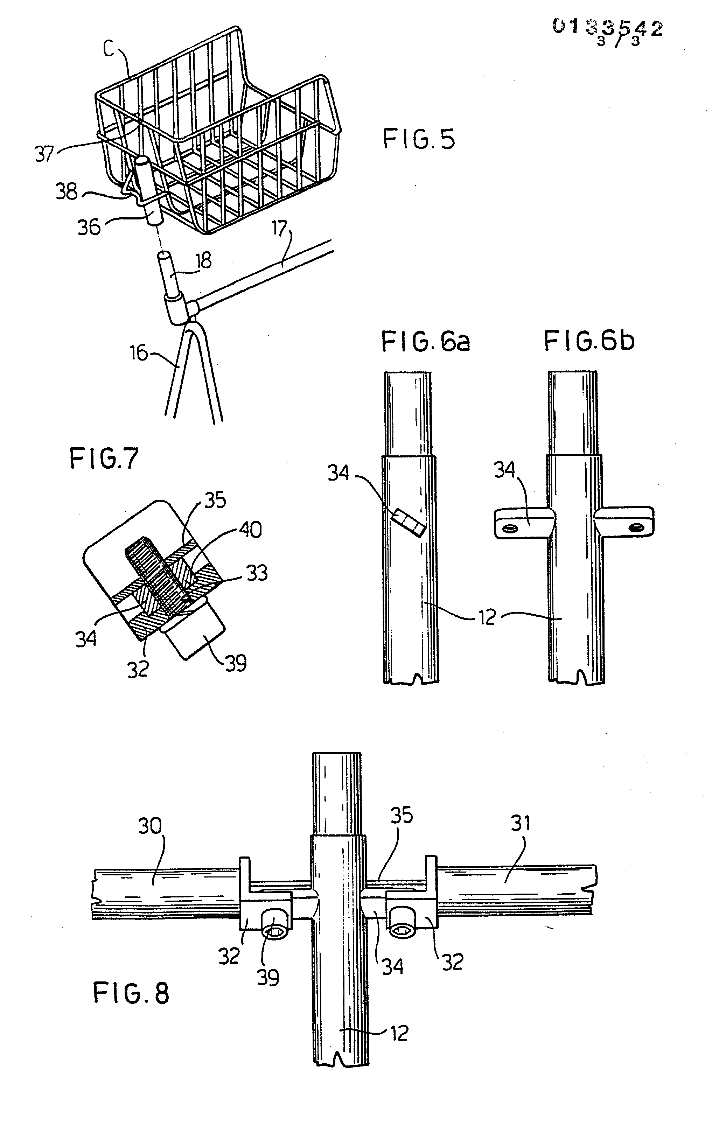

The auxiliary handle bar comprises two symmetrical portions, namely a righthand portion 30 and a lefthand portion 31 (Figs. 6 to 8), which terminate with a L-shaped element 32, the free flange of which is perforated at 33. The saddle holder column 12 is provided with a plate 34 welded thereto at inclined position. The two screws 39 clamp the handle bar by means of the movable counter plate 35 or, when unscrewed, enable the downward movement of the two handle bar portions 30 and 31, so that the latter rest below the basket C and do not hinder the first cyclist's action, when he is alone. The L-shaped element 32 (Fig. 7) is provided with a rebate 40 for receiving the plate 34 and clamping thereagainst.

TOUR MECCANICA S.R.L.

IT - 20129 MILAN

C L A I M S

1.        A single or one-seat bicycle convertible into a two-seat bicycle, wherein rearwardly of the stiffening cross-pieces (13) for the rear wheel, the frame has an additional fork (16) welded at nearly vertical position, the angle of this additional fork (16) being such as to be parallel to the column (12) supporting the normal first saddle (S1) of the bicycle, said fork (16) terminating with a receiving means (18) capable of supporting an additional saddle (S2) or a basket (C) holding different articles.

2.        A bicycle as claimed in Claim 1, wherein at least a means is provided fixed to the column (12), which is capable of carrying two half handle-bars (30, 31) for the second cyclist.

3.        A bicycle as claimed in claim 2, wherein the means is a plate (34), eventually with a counter plate, while the two half-handle bars (30, 31) are provided with L-shaped ends (32) fixed by screws at upright position, that is with the handgrips supporting the second cyclist, or concealed at lowered position under the basket (C).

4.        A bicycle as claimed in Claim 1, wherein the additional pedal cranks (20) are secured and removed by acting on a screw (28) which, by screwing down, secures the pedal crank (20), while, when unscrewed, acts on a shoulder (26) made integral with the pedal crank (20), so as to extract said pedal crank (20) from the drive shaft on which it is mounted.

5.        A bicycle as claimed in Claim 1, wherein the bicycle frame is articulated to be foldable.

FIG.1

FIG.2

20

28a
29
28
22
24

FIG.4

20

FIG.3

21
23
28a
28
25
27
29
26
24

FIG.5

FIG.6a    FIG.6b

FIG.7

FIG.8